# FASCICULE DE BREVET EUROPEEN

(11) **EP 3 204 795 B1**
(45) Date de publication et mention de la délivrance du brevet: **30.01.2019**
(21) Numéro de dépôt: 15777699.8
(22) Date de dépôt: 08.10.2015
(51) Int. Cl.: G01T 7/00, G01T 1/169

(54) **DISPOSITIF D'IMAGERIE DUALE**
DUALE BILDGEBUNGSVORRICHTUNG
DUAL IMAGING DEVICE

(30) Priorité: 09.10.2014 FR 1459704
(43) Date de publication de la demande: 16.08.2017
(73) Titulaire: Commissariat à l'Énergie Atomique et aux Énergies Alternatives, 75015 Paris (FR)
(72) Inventeur: MAHE, Charly, F-26130 Saint-Paul-Trois-Chateaux (FR)
(74) Mandataire: Brevalex
(86) Numéro de dépôt international: PCT/EP2015/073310
(87) Numéro de publication internationale: WO 2016/055594

(56) Documents cités:
- FR-A1- 2 664 380
- FR-A1- 2 879 304
- SAKARI IHANTOLA ET AL: "Principles of UV-gamma coincidence spectrometry", NUCLEAR INSTRUMENTS AND METHODS IN PHYSICS RESEARCH SECTION A: ACCELERATORS, SPECTROMETERS, DETECTORS AND ASSOCIATED EQUIPMENT, vol. 690, 1 octobre 2012 (2012-10-01), pages 79-84, XP055169874, ISSN: 0168-9002, DOI: 10.1016/j.nima.2012.06.044
- LAMADIE F ET AL: "Alpha imaging: first results and prospects", 2004 IEEE NUCLEAR SCIENCE SYMPOSIUM CONFERENCE RECORD 16-22 OCT. 2004 ROME, ITALY, IEEE, PISCATAWAY, NJ, USA, vol. 3, 16 octobre 2004 (2004-10-16), pages 1594-1598, XP010822328, DOI: 10.1109/NSSMIC.2004.1462545 ISBN: 978-0-7803-8700-3

## Description

### DOMAINE TECHNIQUE

La présente invention se rapporte à un dispositif d'imagerie apte à localiser aussi bien des sources d'irradiation gamma que des sources de contamination alpha.

### ÉTAT DE LA TECHNIQUE ANTÉRIEURE

Les dispositifs d'imagerie gamma ont été développés depuis les années 1980, ils permettent de localiser à distance des sources d'irradiation gamma.

La mesure de radioactivité alpha par imagerie date des années 1990 et les dispositifs d'imagerie mis en oeuvre sont devenus compétitifs en termes de sensibilité de mesure dans les années 2000.

Les deux dispositifs ont pour fonction de superposer sur une image visible des sources de radioactivité gamma ou alpha. L'image visible est prise directement par un dispositif d'imagerie respectivement gamma ou alpha. L'image gamma ou alpha est également prise par le même dispositif d'imagerie respectivement gamma ou alpha sans le bouger. Cela permet de superposer les deux images qui ont été prises de manière à obtenir une unique image finale sur laquelle apparait les sources d'irradiation gamma ou les sources de contamination alpha.

L'image visible peut en variante être prise simultanément ou non par une caméra couleur alors que l'image gamma ou alpha est prise par le dispositif d'imagerie gamma ou alpha. Il faut s'assurer qu'il n'y a pas de désaxement entre la caméra couleur et le dispositif d'imagerie et réaliser une correction de parallaxe si nécessaire.

Dans certaines situations, il serait particulièrement intéressant de détecter directement et simplement sur une même image des sources d'irradiation gamma et des sources de contamination alpha. On peut avoir besoin de dresser la cartographie de boîtes à gants ou de cellules blindées, cette cartographie est essentielle pour préparer des phases d'assainissement et de démantèlement d'installations radioactives.

Actuellement aucun dispositif d'imagerie ne le permet, car les deux dispositifs d'imagerie fonctionnent sur des principes de détection différents.

Un dispositif d'imagerie gamma comme la caméra Aladin comporte en cascade depuis la tête jusqu'au corps un collimateur à masque codé ou à sténopé par lequel pénètre le rayonnement gamma (rayonnement électromagnétique), un scintillateur, un tube intensificateur d'image, un faisceau de fibres optiques, un capteur photosensible matriciel (type CCD). Le scintillateur lorsqu'il reçoit un rayonnement gamma via le collimateur le transforme en rayonnement lumineux visible. Le scintillateur est couplé au tube intensificateur d'image. Le tube intensificateur d'image fonctionne dans le visible. Il amplifie le rayonnement lumineux visible émis par le scintillateur. Le faisceau de fibres optiques sert à propager le rayonnement lumineux visible vers le capteur photosensible (tel un CCD) avec des pixels en matrice. La chaîne optique ne fonctionne que dans le visible. Le capteur photosensible est couplé à au moins à au moins une carte électronique permettant un traitement des signaux électroniques délivrés par chacun des pixels du capteur photosensible. Ces signaux traités peuvent être envoyés via un câble à des moyens d'affichage.

Un dispositif d'imagerie alpha comporte simplement en cascade depuis la tête jusqu'au corps un objectif transparent aux ultraviolets, un tube intensificateur d'image sensible dans l'ultraviolet. Un faisceau de fibres optiques sert à propager le rayonnement ultraviolet vers un capteur photosensible (tel un CCD) avec des pixels en matrice. La chaîne optique ne fonctionne que dans l'ultraviolet. Le capteur photosensible est couplé à au moins une carte électronique permettant un traitement des signaux électroniques délivrés par chacun des pixels du capteur photosensible. Ces signaux traités peuvent être envoyés via des moyens de connexion et un câble à des moyens d'acquisition et de traitement. Il est connu que la détection de radiations alpha est possible en détectant le rayonnement ultraviolet émis lorsque l'azote de l'air est excité par le passage de particules alpha. Le spectre ultraviolet correspond aux longueurs d'ondes prépondérantes comprises entre 280 nm et 390 nm. On cherche à ce que le tube intensificateur d'image ne soit pas perturbé par la lumière ambiante visible.

Il est connu de l'art antérieur les travaux de S. Ihantalo *et al.* publiés en 2012 dans la revue scientifique « Nuclear Instruments and Methods in Physics Research A » numéro 690 pages 79 à 84 qui enseigne un dispositif de spectroscopie UV-gamma utilisant deux détecteurs, l'un sensible au rayonnement gamma, l'autre au rayonnement UV pour la détection du rayonnement alpha. Il est connu de l'art antérieur le document FR 2664380 qui enseigne la possibilité d'utiliser un corps et plusieurs blocs modulaires afin d'effectuer plusieurs mesures en parallèle dans le domaine des mesures de radioactivité.

### EXPOSÉ DE L'INVENTION

La présente invention a pour but de réaliser un dispositif de prise d'image qui permet de mettre en évidence, de manière précise, aussi bien une ou plusieurs sources de rayonnement gamma qu'une ou plusieurs sources de contamination alpha situées dans une scène observée.

Elle a aussi pour but de réaliser un dispositif d'imagerie, comportant le dispositif de prise d'image précité, qui permet de détecter et de positionner sur une même image finale, de manière très précise, une ou plusieurs sources de rayonnement gamma et une ou plusieurs sources de contamination alpha situées dans une scène sans avoir à changer de dispositif et sans avoir à le déplacer.

Pour y parvenir, la présente invention propose un dispositif de prise d'image, selon la revendication 1, possédant un jeu de deux têtes interchangeables parmi lesquelles une tête gamma et une tête alpha, une seule de ces têtes pouvant être en position de travail à la fois. Lorsque deux images sont prises successivement alors que la tête a été changée d'une image à l'autre, elles sont prises avec un même axe de visée dans la mesure où le dispositif de prise d'image n'a pas été déplacé.

Plus particulièrement la présente invention concerne un dispositif de prise d'image ayant un corps incluant un tube intensificateur d'image possédant un axe optique et coopérant avec un capteur d'image. Le dispositif de prise d'image comporte, en outre, un jeu de deux têtes interchangeables, chacune d'entre elles ayant un champ de vision défini autour d'un axe de visée, le jeu comportant :
une tête gamma comprenant un collimateur et un scintillateur destiné à transformer un rayonnement gamma provenant d'une source de rayonnement gamma présente dans une scène et pénétrant dans le collimateur, en un rayonnement ultraviolet transmis au tube intensificateur d'image; et
une tête alpha comportant un objectif transparent aux ultraviolets destiné à transmettre un rayonnement ultraviolet engendré par un rayonnement alpha provenant d'une source de contamination alpha présente dans la scène, au tube intensificateur d'image, le tube intensificateur d'image étant sensible au rayonnement ultraviolet provenant aussi bien de la tête alpha que de la tête gamma. Le dispositif de prise d'image comporte, en outre, des moyens d'accouplement d'une seule des deux têtes du jeu à la fois au corps, la tête accouplée ayant son axe de visée confondu avec l'axe optique du tube intensificateur d'image, de manière à permettre, pour la tête gamma, au rayonnement ultraviolet issu du scintillateur d'atteindre le tube intensificateur d'image, et pour la tête alpha, au rayonnement ultraviolet qui l'a traversée, d'atteindre le tube intensificateur d'image.

Les moyens d'accouplement sont avantageusement mécaniques. Cela peut être des moyens d'accouplement par vissage ou par baïonnette.

De manière très simple, le changement de tête peut être manuel.

En variante, pour effectuer une permutation plus rapide, le changement de tête peut être automatique, les deux têtes étant montées sur un même support solidaire du dispositif de prise d'image et apte à se déplacer en rotation et/ou en translation.

Pour diminuer l'impact du bruit lumineux ambiant, lors de prises d'image avec la tête alpha, il est préférable que le tube intensificateur d'image soit un tube intensificateur d'image de type aveugle aux ultraviolets d'origine solaire.

Le scintillateur de la tête gamma peut avantageusement être en fluorure de baryum BaF₂ qui est le matériau privilégié pour la détection duale avec un tube intensificateur d'image de type aveugle aux ultraviolets d'origine solaire. En variante, le scintillateur peut être en iodure de césium CsI, germanate de bismuth BGO, tungstate de cadmium CdWO₄ de manière à ce que le tube intensificateur d'image soit sensible aux photons ultraviolets émis par le scintillateur.

La tête gamma peut posséder un collimateur de type à masque codé ou à sténopé.

Il est préférable que la tête alpha comporte, en amont de l'objectif par rapport à la scène, un filtre passe-bande ultraviolet pour favoriser l'élimination du bruit lumineux visible ambiant.

Pour atténuer les rayons gamma atteignant le dispositif de prise d'image hors de son champ de vision, le corps peut être équipé d'un blindage de protection.

Il est préférable que le blindage protège également le scintillateur de la tête gamma, lorsqu'elle est accouplée au corps, vis-à-vis de rayonnement gamma atteignant la tête gamma hors de son champ de vision.

Il est possible d'équiper le dispositif de prise d'image d'au moins un élément solidaire directement ou indirectement du corps, cet élément étant choisi parmi un détecteur de spectrométrie gamma collimaté, un pointeur laser, une caméra couleur, un dispositif de mesure de débit de dose non collimaté, un télémètre laser orientable. Ces éléments permettent de donner au dispositif de prise d'image d'autres fonctions utiles pour la détection et la caractérisation des sources de rayonnement gamma et des sources de contamination alpha.

La présente invention concerne également un dispositif d'imagerie, selon la revendication 13, comportant le dispositif de prise d'image précédent et de plus un dispositif d'acquisition et de traitement destiné à acquérir des images, connecté au capteur d'image, un dispositif d'affichage relié au dispositif d'acquisition et de traitement, destiné à afficher des images visibles de la scène mettant en évidence une ou plusieurs sources de rayonnement gamma et/ou une ou plusieurs sources de contamination alpha qui y seraient présentes.

La présente invention concerne également un procédé de détection et de localisation de sources de rayonnement gamma ou de sources de contamination alpha, selon la revendication 14, à l'aide du dispositif d'imagerie précédent, dans lequel :
on capture avec le dispositif d'imagerie une image visible de la scène observée,
on transfère cette image visible dans le dispositif d'acquisition et de traitement où elle est mémorisée,
on capture une image gamma ou alpha de la scène observée avec le dispositif de prise d'image, la tête gamma ou la tête alpha étant accouplée au corps du dispositif de prise d'image,
on transfère l'image gamma ou alpha de la scène observée dans le dispositif d'acquisition et de traitement où elle est mémorisée,
on superpose l'image gamma ou alpha à l'image visible pour obtenir une image visible finale.

La présente invention concerne également un procédé de détection et de localisation de sources de rayonnement gamma et de sources de contamination alpha, selon la revendication 15, dans lequel on effectue le procédé exposé précédemment à l'exception de la superposition, et dans lequel, après l'étape de capture de l'image gamma ou alpha de la scène observée, on désaccouple la tête gamma ou la tête alpha du corps, on accouple la tête alpha ou la tête gamma au corps, on capture une image alpha ou gamma de la scène observée avec le dispositif de prise d'image, on transfère l'image alpha ou gamma de la scène observée dans le dispositif d'acquisition et de traitement où elle est mémorisée, on superpose à l'image visible, l'image gamma ou alpha et l'image alpha ou gamma pour obtenir l'image visible finale.

Dans ces procédés, l'image visible est capturée avec le dispositif de prise d'image muni de la tête gamma ou de la tête alpha ou avec la caméra en couleur.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
la figure 1 montre un exemple de dispositif d'imagerie duale objet de l'invention ;
les figures 2A, 2B montrent des exemples de la tête gamma du dispositif d'imagerie duale objet de l'invention ;
la figure 3 montre un exemple de tête alpha du dispositif d'imagerie duale objet de l'invention ;
les figures 4A, 4B montrent un exemple du dispositif de prise d'image, objet de l'invention avec des moyens d'accouplement mécaniques manuels ;
la figure 5 montre un exemple du dispositif de prise d'image, objet de l'invention avec des moyens d'accouplement mécaniques automatiques ;
les figures 6A, 6B montrent un exemple du dispositif de prise d'image, objet de l'invention, équipé d'un blindage et soit de la tête gamma, soit de la tête alpha pour utilisation dans un environnement irradiant ;
les figures 7A, 7B montrent un exemple du dispositif de prise d'image, objet de l'invention, équipé d'un blindage réduit et de la tête gamma, ou de la tête alpha et sans blindage pour utilisation dans un environnement non irradiant ;
la figure 8 montre un exemple de dispositif de de prise d'image équipé d'au moins une caméra couleur ;
la figure 9 montre un synoptique d'un exemple de mode de fonctionnement du dispositif d'imagerie duale.

Des parties identiques, similaires ou équivalentes des différentes figures portent les mêmes références numériques de façon à faciliter le passage d'une figure à l'autre.

### EXPOSÉ DÉTAILLÉ DE MODES DE RÉALISATION PARTICULIERS

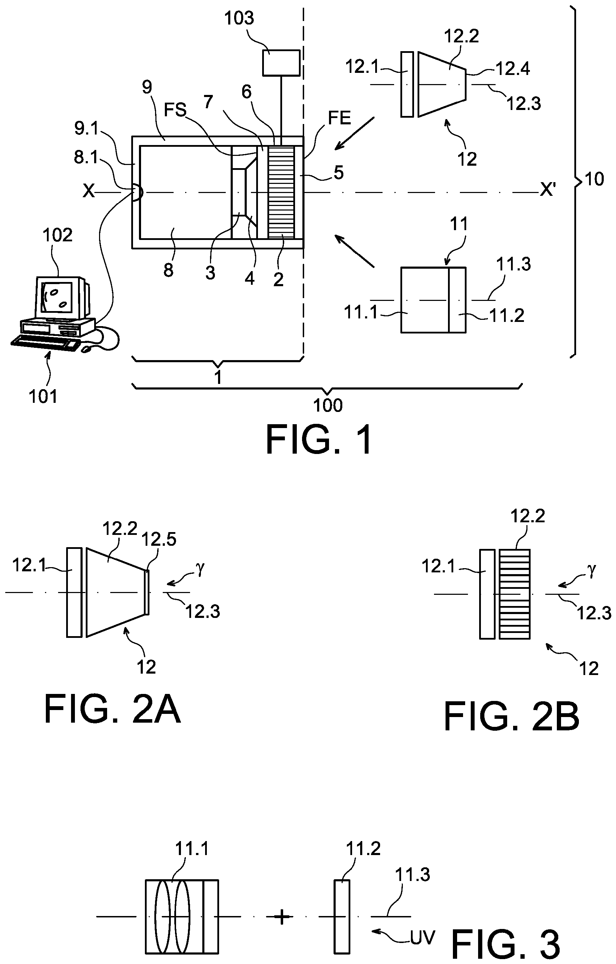

On va maintenant en se référant à la figure 1 décrire un dispositif d'imagerie duale d'une scène observée, objet de l'invention.

Il comporte un dispositif de prise d'image 100 associé à un dispositif d'acquisition et de traitement 101, lui-même associé à un dispositif d'affichage 102. Le dispositif de prise d'image 100 comporte un corps 1 et un jeu 10 de deux têtes 11, 12 interchangeables. L'une des têtes 11 est une tête alpha qui sera utilisée pour une acquisition d'image d'une scène en mode alpha et l'autre tête 12 est une tête gamma qui sera utilisée pour une acquisition de la même scène en mode gamma. Le corps 1 comprend dans une enveloppe 9, un tube intensificateur d'image 2 pourvu d'un axe optique XX' qui constitue l'axe de visée de référence du dispositif de prise d'image 100.

Le tube intensificateur d'image 2 est couplé avec un capteur d'image 3 à semi-conducteur, par exemple de type CCD, par l'intermédiaire d'un faisceau de fibres optiques 4. Plus précisément le tube intensificateur d'image 2 est sensible au rayonnement ultraviolet. Il comporte à partir d'une face d'entrée FE, en cascade, une photocathode 5, au moins une galette de micro-canaux 6 et un écran luminescent 7. La photocathode 5 a pour fonction de convertir un rayonnement incident ultraviolet en électrons. La au moins une galette de micro-canaux 6 a pour fonction d'augmenter le gain électronique. L'écran luminescent 7 a pour fonction de transformer les électrons ayant traversé la galette de micro-canaux 6 en lumière visible. L'écran luminescent 7 comporte une face de sortie FS tournée vers le faisceau de fibres optiques 4. Le capteur d'image 3 est connecté à au moins un dispositif de mise en forme vidéo 8 des images délivrées par le capteur d'image 3. Ce dispositif de mise en forme vidéo 8 des images est associé à une alimentation électrique non représentée. Le faisceau de fibres optiques 4, le capteur d'image 3, le dispositif de mise en forme vidéo 8 des images sont logés dans l'enveloppe 9. L'enveloppe 9 comporte un fond 9.1 au niveau du dispositif de mise en forme vidéo 8. Des moyens de connexion 8.1 du dispositif de mise en forme vidéo 8 sont accessibles depuis l'extérieur de l'enveloppe 9.

Le dispositif d'imagerie comporte, en outre, un dispositif d'acquisition et de traitement 101 qui peut être réalisé par l'unité centrale d'un ordinateur personnel relié via un câble au dispositif de mise en forme vidéo 8 des images et donc indirectement au capteur d'image 3, un dispositif d'affichage 102 qui peut être réalisé par l'écran de l'ordinateur personnel et un dispositif de commande 103 du tube intensificateur d'image pour faire passer sa photocathode 5 d'un état bloqué à un état de fonctionnement. Le dispositif d'acquisition et de traitement 101, le dispositif d'affichage 102 et le dispositif de commande 103 sont déportés par rapport au dispositif de prise d'image 100.

Selon une caractéristique de l'invention, le tube intensificateur d'image 2 est sensible dans la bande des ultraviolets proche du visible, par exemple, comprise entre environ 280 et 390 nm. On rappelle que la bande des ultraviolets est comprise entre 10 et 400 nm et la bande du visible s'étend au-delà de 400 nm jusqu'à environ 700 nm.

On choisira de préférence un tube intensificateur d'image 2 de type aveugle aux ultraviolets d'origine solaire (connus sous la dénomination anglaise de solar blind) pour limiter l'impact du bruit lumineux ambiant lors de l'acquisition en mode alpha. Ces tubes intensificateurs d'image 2 sont sensibles à des rayonnements de longueur d'onde inférieure à 390 nm. Il est sûr possible d'utiliser une tube intensificateur d'image 2 standard, au risque de d'acquérir du bruit lumineux visible ou à la limite du visible en mode alpha. Ce bruit peut être atténué par un filtre passe-bande ultraviolet qui écrête la lumière visible.

On va décrire maintenant la tête gamma 12 en se référant aux figures 1 et 2A, 2B.

La tête gamma 12 est construite autour d'un axe de visée 12.3. Elle comporte en cascade au moins deux éléments. Le premier élément référencé 12.1, qui se trouve en aval par rapport à la propagation du rayonnement gamma, c'est-à-dire du côté du corps 1 lorsque la tête gamma 12 est accouplée au corps 1, est un scintillateur. Ce scintillateur 12.1 est réalisé dans un matériau qui émet des ultraviolets suite à l'absorption d'un rayonnement gamma. Ces ultraviolets auront une longueur d'onde comprise entre environ 220 et 550 nm en fonction du scintillateur utilisé. Le tube intensificateur d'image 2 est sensible aux ultraviolets émis par le scintillateur 12.1. On peut par exemple réaliser le scintillateur 12.1 en fluorure de baryum BaF₂ qui émet des ultraviolets entre environ 220 nm et 310, en tungstate de cadmium CdWO₄ qui émet des ultraviolets aux alentours de 475 nm, en iodure de césium CsI qui émet des ultraviolets aux alentours de 550 nm, en germanate de bismuth BGO qui émet des ultraviolets aux alentours de 480 nm. Le second élément référencé 12.2 est un collimateur. Le collimateur 12.2 se trouve face à la scène observée à imager lors d'une prise d'image, en amont par rapport à la propagation du rayonnement gamma. Sur la figure 2A, le collimateur 12.2 est un collimateur à sténopé. Sur la figure 2B, le collimateur 12.2 est à masque codé. La face avant de la tête gamma 12 est référencée 12.4. Elle est sensiblement conique dans la variante à collimateur de type sténopé et est sensiblement plane dans la variante collimateur à masque codé. La variante à collimateur 12.2 de type sténopé permet d'obtenir une profondeur de champ infinie, les sources d'irradiation gamma visées lors d'une prise d'image apparaîtront nettement quelle que soit leur distance par rapport au dispositif de prise d'image 100 sans qu'une mise au point particulière ne soit nécessaire. La variante à collimateur 12.2 à masque codé possède une plus grande sensibilité que celle à collimateur 12.2 à sténopé.

La tête alpha 11 est aussi construite autour d'un axe de visée 11.3. On se réfère à la figure 3 en combinaison avec la figure 1. Elle comporte principalement un objectif 11.1 incluant au moins une lentille. Cet objectif 11.1 est transparent au rayonnement ultraviolet émis lorsque l'azote de l'air est excité par le passage de particules alpha. Les photons ultraviolets qui vont la traverser ont une longueur d'onde inférieure à environ 390 nm. Il est possible de placer, en amont de l'objectif 11.1, du côté de la scène à observer, un filtre passe-bande ultraviolet 11.2 favorisant l'atténuation du bruit lumineux visible ambiant.

Le dispositif de prise d'image 100, objet de l'invention, comporte, en outre, des moyens d'accouplement 20 d'une seule des têtes 11 ou 12 à la fois au corps 1 et donc au tube intensificateur d'image 2.

En effet lorsque la tête gamma 12 est accouplée au tube intensificateur d'image 2, une image gamma de la scène observée peut être prise de manière à détecter la présence de sources d'irradiation gamma.

Lorsque la tête alpha 11 est accouplée au tube intensificateur d'image 2, une image alpha de la scène observée peut être prise de manière à détecter la présence de sources de contamination alpha.

On ne déplace pas le corps 1 du dispositif de prise d'image 100 lors de la prise successive d'une image gamma et d'une image alpha. On ne fait qu'accoupler au corps 1, la tête 11 ou 12 correspondant au type d'image de la scène que l'on souhaite acquérir.

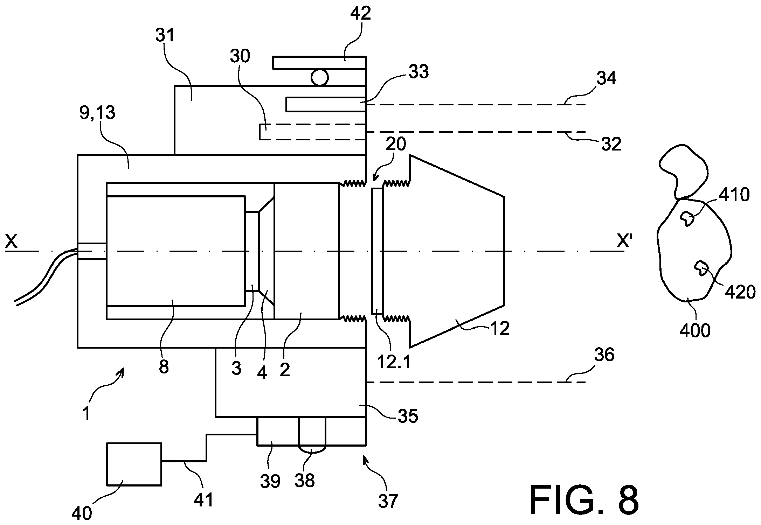

Pour pouvoir localiser les sources contaminées alpha et/ou les sources d'irradiation gamma, il est préférable de prendre une image visible de la scène à observer et de superposer l'image visible et l'image gamma prise avec la tête gamma 12 et/ou l'image alpha prise avec la tête alpha 11 pour obtenir une image visible finale exploitable. La superposition des deux images ou des trois images est faite par les moyens d'acquisition et de traitement 101. Cette image visible peut aussi bien être prise par le dispositif de prise d'image 100 lorsque la tête alpha 11 est accouplée au corps 1 ou lorsque la tête gamma 12 est accouplée au corps. Il est ainsi possible de prendre l'image visible avec la tête 11 ou 12 qui est accouplée au tube intensificateur d'image 2 en premier lors d'une séquence de prise d'images. Avec le dispositif de prise d'image objet de l'invention, on prendra bien la même scène, quelle que soit l'image qui est prise : image visible, image alpha ou image gamma. Les moyens d'acquisition et de traitement 101 peuvent comprendre un logiciel spécifique permettant la réalisation des acquisitions d'images. Ce logiciel permet l'obtention des images finales en temps réel ou quasiment en temps réel ou à postériori. Il peut permettre de réaliser des calculs complémentaires notamment à partir des mesures faites avec les éléments supplémentaires associés décrits à la figure 8.

La tête gamma 12 comporte en outre un obturateur 12.5 qui est fermé lors de la prise d'une image gamma et qui est ouvert lors de la prise d'une image visible. Il a été représenté en face avant de la tête gamma 12 uniquement sur la figure 2A pour ne pas surcharger les figures. Un obturateur n'est pas nécessaire dans la tête alpha.

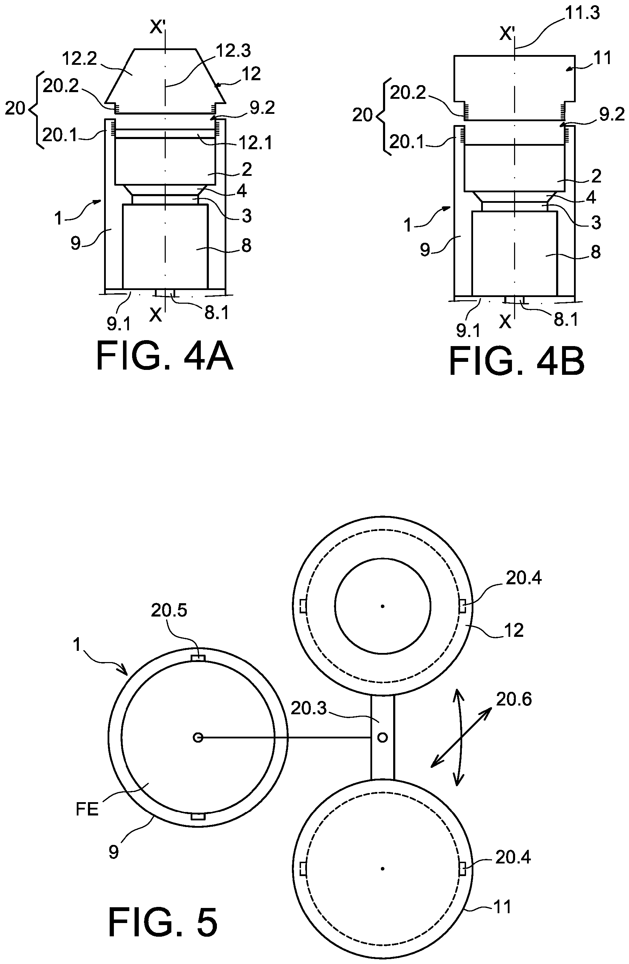

On se réfère aux figures 4A, 4B. Dans ce mode de réalisation, les deux têtes 11, 12 sont permutables et amovibles du corps 1 de manière manuelle. Dans ce mode de réalisation, l'enveloppe 9 comporte à l'opposé du fond 9.1 une extrémité ouverte 9.2.

Les moyens d'accouplement 20 sont mécaniques et manuels, ils comprennent un dispositif de fixation par vissage au corps 1. Ce dispositif de fixation se décompose en un filetage femelle 20.1 (taraud) et en un filetage mâle 20.2 (ou filetage externe). Le filetage femelle 20.1 est porté par l'enveloppe 9, plus précisément par sa paroi interne, en bord de son extrémité ouverte 9.2. Le filetage mâle 20.2 (ou filetage externe) est porté par chacune des têtes 12, 11. Le filetage mâle 20.2 est porté par la une surface périphérique externe de chacune des têtes 12, 11. Ce filetage mâle 20.2 se trouve de préférence sur le collimateur 12.2 de la tête gamma 12. Le scintillateur 12.1 est alors exempt de filetage et vient se loger à l'intérieur d'un espace délimité latéralement par les deux filetages 20.1, 20.2 une fois vissés l'un à l'autre, en amont par le collimateur 12.2 et en aval par le tube intensificateur d'image 2. La version avec la tête gamma 12 est représentée sur la figure 4A et celle avec la tête alpha 11 est représentée sur la figure 4B. Pour la tête alpha 11, le filetage mâle 20.2 est porté par l'objectif 11.1. On ne voit pas le filtre passe-bande.

La tête 12, 11 qu'elle soit gamma ou alpha, lorsqu'elle est fixée au corps 1, a son axe de visée 12.3, 11.3 qui est confondu l'axe optique XX' du tube intensificateur d'image 2. La fixation de l'une des têtes 11 ou 12 se fait manuellement en vissant une et une seule des deux têtes 11 ou 12 au corps 1 du dispositif de prise d'image 100.

On peut également envisager d'utiliser des moyens d'accouplement 20 mécaniques mais qui seraient automatisés au lieu d'être manuels. On se réfère à la figure 5 qui est une vue de face du dispositif de prise d'image. La tête gamma 12 est une tête à collimateur de type sténopé. Les moyens d'accouplement 20 comportent toujours le dispositif de fixation 20.4, 20.5 de l'une des têtes 11 ou 12 au corps 1. Il comporte, en outre, un support 20.3 pour les têtes 11, 12, des moyens 20.6 pour déplacer le support 20.3, en rotation et/ou en translation, tel un ou plusieurs moteurs. Les deux têtes 11, 12 sont solidaires dudit support 20.3 apte à se déplacer en rotation et/ou en translation. Le support 20.3 est solidaire du dispositif de prise d'image.

Lors du déplacement du support 20.3, l'une des têtes 11, 12 finit par se trouver dans une position où elle peut être fixée au corps 1. Le dispositif de fixation 20.4, 20.5 peut être une fixation par baïonnette comprenant au moins deux ergots 20.4 sur la tête 11, 12 et au moins deux fentes en 20.5 sur le corps 1 au niveau de l'enveloppe 9. La fixation par vissage est également envisageable dans cette configuration de moyens d'accouplement 20 mécaniques et automatisés. Le dispositif de fixation par baïonnette peut également être utilisé dans les moyens d'accouplement manuels. Dans cette configuration également l'axe de visée 11.3, 12.3 de la tête 11, 12 qui est fixée au corps 1 est confondu avec l'axe optique XX' du tube intensificateur d'image 2. Les axes se limitent à des points sur cette figure 5.

La fréquence de prise d'images dépend bien sûr de la vitesse de retrait de l'une des têtes et de mise en place de l'autre. Avec les moyens d'accouplement mécaniques automatisés, on peut atteindre des fréquences plus élevées.

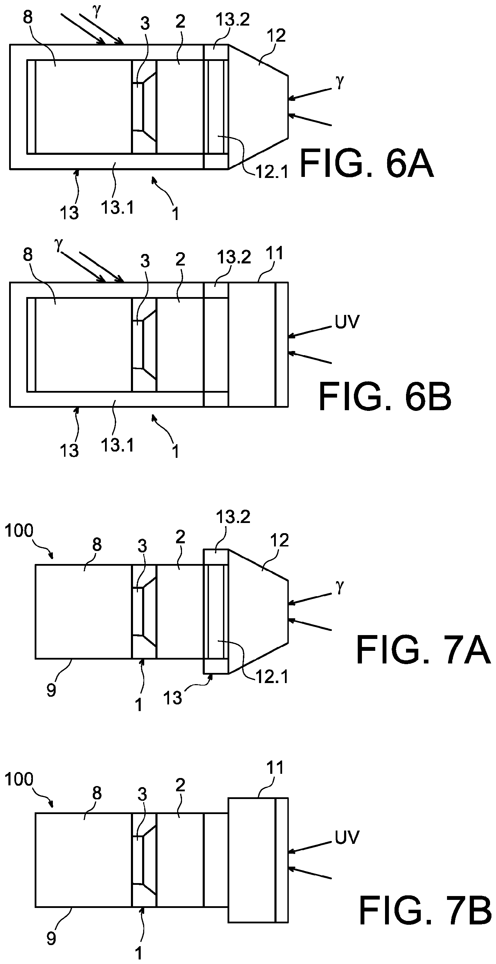

Pour que le dispositif d'imagerie puisse servir lorsque l'irradiation gamma environnante est forte, il est préférable de prévoir que le corps 1 du dispositif de prise d'image soit blindé vis à vis de l'irradiation ambiante. L'enveloppe 9 du dispositif de prise d'image peut servir de blindage, si elle est réalisée dans un matériau ayant une capacité d'arrêt des radiations satisfaisante. Il s'agit des matériaux ayant une densité élevée, tel que le plomb, le tungstène ou leurs alliages et notamment l'alliage à base de tungstène connu sous le nom Dénal (marque déposée). Ce mode de réalisation est visible sur la figure 8. En variante, l'enveloppe 9 peut être entourée d'une gaine externe 13 amovible qui sert de blindage comme illustré sur les figures 6A, 6B. On peut ainsi prévoir plusieurs gaines 13 d'épaisseur différentes à choisir suivant que l'activité des sources d'irradiation est plus ou moins importante.

En environnement irradiant, le blindage 13 sert à protéger les composants électroniques du corps 1, comme le tube intensificateur d'image 2 et le capteur d'image 3 de l'irradiation gamma. Il atténue le rayonnement gamma qui atteint le dispositif de prise d'image hors du champ de vision de la tête 11 ou 12 utilisée. Il est préférable que la tête gamma 12 soit aussi protégée au niveau de son scintillateur 12.1 contre le rayonnement gamma comme représenté sur la figure 6A lorsqu'elle est accouplée au corps 1. On limite ainsi le champ de vision en mode gamma et on réduit l'impact des sources parasites gamma situées hors du champ de vision de la tête gamma 12. Le blindage 13 entoure le scintillateur 12 .1 lorsque la tête gamma 12 est accouplée au corps 1. Dans la version où chaque tête 12, 11 doit être vissée individuellement au corps 1, le blindage 13 peut s'étendre jusqu'au filetage femelle 20.1 en entourant le corps 1, par exemple. La figure 6B, représente le dispositif de prise d'image 100 avec le blindage 13 et la tête alpha 11 accouplée au corps 1. En variante, il est possible que le blindage 13 soit modulaire avec une partie principale 13.1 autour du corps 1 et une partie additionnelle 13.2 en forme de couronne placée autour d'une partie de la tête, notamment du scintillateur 12.1 de la tête gamma 12 lorsque cette dernière est accouplée au corps 1.

Lorsque l'environnement dans lequel se trouve le dispositif d'imagerie duale est non irradiant, le blindage peut ne pas être utilisé autour du corps 1, notamment si le dispositif d'imagerie est destiné à acquérir une image des sources de contamination alpha (figure 7B). Le dispositif d'imagerie duale est moins lourd et plus maniable sans blindage. On pourra prévoir toutefois dans une application de détection de sources d'irradiation gamma, sans irradiation ambiante, de placer une couronne de blindage 13.2 autour du scintillateur 12.1 comme illustré sur la figure 7A pour ne prendre en compte que le rayonnement gamma dans le champ de vision de la tête gamma.

Il est possible, en outre, que le dispositif d'imagerie duale objet de l'invention soit équipé d'un détecteur de spectrométrie gamma collimaté 30, solidaire directement ou indirectement du corps 1. Le détecteur de spectrométrie gamma collimaté 30 possède un champ de vision s'étendant autour d'un axe 32 qui est parallèle à l'axe optique XX' du tube intensificateur d'image 2. Un tel détecteur de spectrométrie gamma collimaté 30 peut être similaire à celui décrit dans la demande de brevet FR 2 879 304 du même demandeur.

Le collimateur de spectrométrie gamma 31 est réalisé en matériau dense, sa densité sera supérieure à celle de l'acier. Ce matériau peut par exemple être réalisé à base de plomb et/ou de tungstène et/ou de cuivre. Le collimateur 31 est solidaire du corps 1 du dispositif de prise d'image.

Le dispositif d'imagerie duale objet de l'invention peut aussi être équipé, comme décrit dans la demande de brevet précitée, d'un pointeur laser 33. Le pointeur laser 33 est couplé avec le détecteur de spectrométrie gamma collimaté 30. Il est solidaire directement ou indirectement du corps 1 du dispositif de prise d'image. Il peut être placé à l'intérieur du collimateur 31 de spectrométrie gamma ou à l'extérieur.

Le pointeur laser 33 a un axe de visée 34 qui est parallèle à l'axe optique XX' du tube intensificateur d'image 2 et il est pointé vers la scène à imager.

Comme on l'a décrit plus haut, l'image visible prise par le dispositif de prise d'image 100, lorsque l'une des têtes 11 ou 12 est accouplée au corps 1, est une image monochrome, ce qui se traduit par une image noir et blanc au niveau du dispositif d'affichage 102. Il est possible de munir le dispositif d'imagerie duale objet de l'invention, d'un dispositif de prise d'image auxiliaire de type caméra couleur 35 solidaire directement ou indirectement du corps 1 du dispositif de prise d'image. Le dispositif de prise d'image peut être qualifié de dispositif de prise d'image principal. Cette caméra couleur 35 a un axe de visée 36 qui est parallèle à l'axe optique XX' du tube intensificateur d'image 2, elle est pointée vers la scène observée à imager 400. Cette caméra couleur 35 peut être similaire à celle décrite dans la demande de brevet précitée.

L'image prise par la caméra couleur 35 et celle de type gamma ou de type alpha prise par le dispositif de prise d'image 100 principal, qu'il soit équipé de la tête gamma 12 ou de la tête alpha 11, peuvent être sensiblement simultanées.

L'image visible prise par la caméra couleur 35 est ensuite superposée avec celle de type gamma ou alpha prise par le dispositif de prise d'image 100 muni de l'une des têtes gamma ou alpha 12 ou 11 et éventuellement avec, de plus, celle de type alpha ou gamma prise par le dispositif de prise d'image 100 muni de l'autre tête alpha ou gamma 11 ou 12. On obtient ainsi une image couleur de la scène observée 400 sur laquelle apparaissent de manière visible et précise des sources d'irradiation gamma 410 et/ou des sources de contamination alpha 420 présentes.

Il est possible, en outre, de munir le dispositif d'imagerie objet de l'invention, d'un dispositif de mesure de débit de dose non collimaté 37 en périphérie du dispositif d'imagerie. Il comporte principalement un porte-sonde 38 solidaire directement ou indirectement du corps 1 du dispositif d'imagerie duale, une sonde de mesure 39 du débit de dose, destinée à être portée par le porte-sonde 37 et des moyens de mesure extérieurs 40 reliés à la sonde 37 de mesure du débit de dose par des conducteurs électriques 41.

Il est possible également de munir le dispositif d'imagerie duale objet de l'invention, d'un télémètre laser 42 orientable pour déterminer la distance de chaque source d'irradiation gamma ou de chaque source de contamination alpha de la scène observée au dispositif d'imagerie duale. Les informations de distance de chaque source au dispositif d'imagerie duale sont utilisées pour déterminer l'activité de ces sources. Une source étant localisée sur une image affichée par le dispositif d'affichage, on oriente le faisceau laser du télémètre laser 42 sur cette dernière en le suivant sur le dispositif d'affichage. Le faisceau laser est réfléchi par la source d'irradiation ou de contamination et le télémètre laser 42 fournit alors sa distance. Avec cette distance, il est possible de déterminer l'activité de la source d'irradiation ou de contamination.

On va maintenant décrire un mode de fonctionnement du dispositif d'imagerie objet de l'invention en se référant aux figures 1, 8 et 9. On commence par capturer une image visible de la scène observée avec le dispositif d'imagerie duale. Cette image est transférée dans le dispositif d'acquisition et de traitement 101 où elle est mémorisée.

Cette image peut être prise par le dispositif d'imagerie auxiliaire, c'est-à-dire, la caméra couleur 35 ou bien par le dispositif de prise d'image 100 principal dans la mesure où il est équipé de l'une de ses têtes 11 ou 12.

On capture une image gamma ou alpha de la scène observée avec le dispositif de prise d'image 100, la tête gamma 12 ou la tête alpha 11 étant accouplée au corps 1 et donc au tube intensificateur d'image 2. Cette image gamma ou alpha est transférée dans le dispositif d'acquisition et de traitement 101 où elle est traitée et mémorisée. Le traitement conduit à une représentation des sources d'irradiation gamma ou des sources de contamination alpha qui sont présentes dans la scène observée. Le traitement peut s'agir d'un filtrage. Si l'on désire seulement localiser les sources d'irradiation gamma ou les sources de contamination alpha, on superpose l'image visible avec l'image gamma ou l'image alpha. On applique les deux images l'une sur l'autre en les faisant coïncider de manière à obtenir une image finale visible laissant apparaitre les sources d'irradiation gamma ou les sources de contamination alpha. Cette superposition se fait dans le dispositif d'acquisition et de traitement 101. L'image finale visible est affichée dans le dispositif d'affichage 102. Si l'image visible a été prise par la caméra couleur 35, une correction de parallaxe est effectuée lors de la superposition puisque la caméra couleur 35 a un axe de visée 36 qui est parallèle mais décalé par rapport à l'axe de visée XX' de référence du dispositif de prise d'image 100.

Si l'on désire obtenir une image finale visible qui montre à la fois les sources d'irradiation gamma et les sources de contamination alpha, on désaccouple la tête gamma ou alpha 12 ou 11 du corps 1, on la remplace par la tête alpha ou gamma 11 ou 12. On capture une image alpha ou gamma de la scène observée avec le dispositif de prise d'image 100. Cette image alpha ou gamma est transférée dans le dispositif d'acquisition et de traitement 101 où elle est traitée et mémorisée. Le traitement conduit à une représentation des sources de contamination alpha ou des sources d'irradiation gamma qui se trouvent dans la scène observée. Il peut s'agir d'un filtrage.

On superpose alors l'image visible avec l'image gamma ou alpha prise en premier et avec l'image alpha ou gamma prise en deuxième. On applique les trois images les unes sur les autres en les faisant coïncider de manière à obtenir une image finale visible laissant apparaître les sources d'irradiation gamma et les sources de contamination alpha. Cette superposition se fait dans le dispositif d'acquisition et de traitement 101. L'image finale visible est affichée sur le dispositif d'affichage 102. La correction de parallaxe est également effectuée sur l'image visible si elle a été prise par la caméra couleur 35.

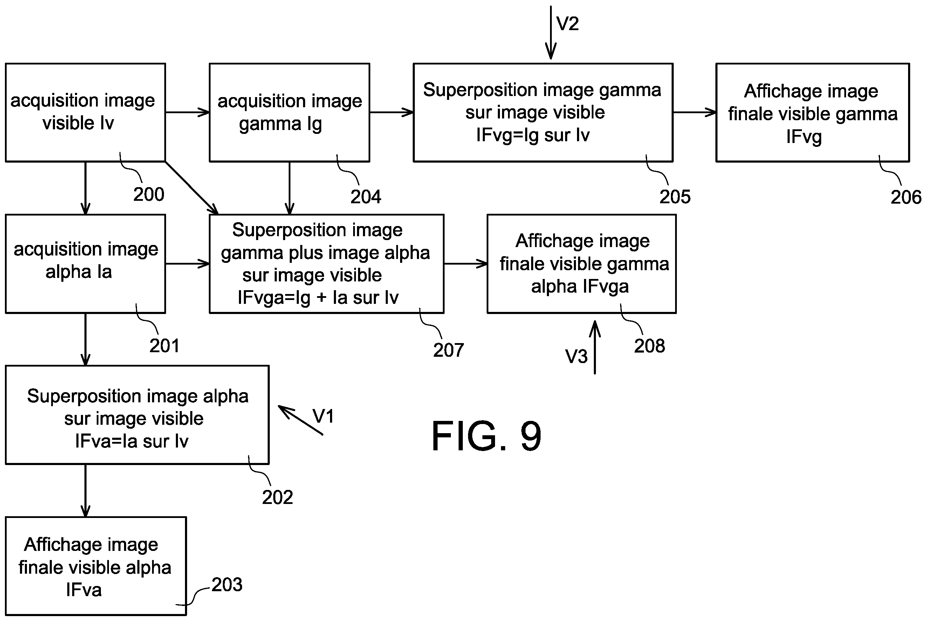

On a représenté de manière schématique sur la figure 9, un synoptique d'un mode de fonctionnement du dispositif d'imagerie duale. A partir de l'acquisition d'une image visible Iv (bloc 200), nous avons représenté une première voie V1 qui correspond à l'acquisition d'une l'image alpha la (bloc 201), à la superposition de l'image alpha la sur l'image visible Iv pour obtenir une image finale visible alpha IFva (bloc 202) et à l'affichage de l'image finale visible alpha IFva (bloc 203). Nous avons également représenté une seconde voie V2 qui correspond à l'acquisition d'une image gamma Ig (bloc 204), à la superposition de l'image gamma Ig sur l'image visible Iv pour obtenir une image finale visible gamma IFvg (bloc 205) et à l'affichage de l'image finale visible gamma IFvg (bloc 206). Une autre voie V3 est représentée, à partir des blocs, 200, 201 et 204, on superpose l'image gamma Ig et l'image alpha la sur l'image visible Iv pour obtenir une image finale visible gamma alpha IFvga (bloc 207). Le dernier bloc 208 représente l'étape d'affichage de l'image finale visible gamma alpha IFga.

## Revendications

1. Dispositif de prise d'image (100) ayant un corps (1) incluant un tube intensificateur d'image (2) possédant un axe optique (XX') et coopérant avec un capteur d'image (3),
**caractérisé en ce que** le dispositif de prise d'image comporte, en outre :
un jeu (10) de deux têtes interchangeables (11, 12), chacune d'entre elles ayant un champ de vision défini autour d'un axe de visée (11.3, 12.3), le jeu comportant :
une tête gamma (12) comprenant un collimateur (12.2) et un scintillateur (12.1) destiné à transformer un rayonnement gamma provenant d'une source de rayonnement gamma (410) présente dans une scène (400) et pénétrant dans le collimateur (12.2), en un rayonnement ultraviolet transmis au tube intensificateur d'image (2); et
une tête alpha (11) comportant un objectif transparent (11.1) aux ultraviolets destiné à transmettre, un rayonnement ultraviolet engendré par un rayonnement alpha provenant d'une source de contamination alpha (420) présente dans la scène (400), au tube intensificateur d'image (2), le tube intensificateur d'image (2) étant sensible au rayonnement ultraviolet provenant aussi bien de la tête alpha (11) que de la tête gamma (12),
et des moyens d'accouplement (20) d'une seule des deux têtes du jeu (10) à la fois au corps (1), la tête (11 ou 12) accouplée ayant alors son axe de visée (11.3 ou 12.3) confondu avec l'axe optique (XX') du tube intensificateur d'image (2) de manière à permettre, pour la tête gamma (12), au rayonnement ultraviolet issu du scintillateur (12.1) d'atteindre le tube intensificateur d'image (2), et pour la tête alpha (11), au rayonnement ultraviolet qui l'a traversée d'atteindre le tube intensificateur d'image (2).

2. Dispositif de prise d'image selon la revendication 1, dans lequel les moyens d'accouplement (20) sont mécaniques.

3. Dispositif de prise d'image selon la revendication 2, dans lequel les moyens d'accouplement (20) sont des moyens d'accouplement par vissage ou par baïonnette.

4. Dispositif de prise d'image selon l'une des revendications 1 à 3, dans lequel le changement de tête (11, 12) est manuel.

5. Dispositif de prise d'image selon l'une des revendications 1 à 3, dans lequel le changement de tête (11, 12) est automatique, les deux têtes (11, 12) étant montées sur un même support solidaire (20.3) du dispositif de prise d'image et apte à se déplacer en rotation et/ou en translation.

6. Dispositif de prise d'image selon l'une des revendications 1 à 5, dans lequel le tube intensificateur d'image (2) est un tube intensificateur d'image aveugle aux ultraviolets d'origine solaire.

7. Dispositif d de prise d'image selon l'une des revendications 1 à 6, dans lequel le scintillateur (12.1) de la tête gamma (12) est en fluorure de baryum BaF₂, en tungstate de cadmium CdWO₄, en iodure de césium Csl, ou en germanate de bismuth BGO.

8. Dispositif de prise d'image selon l'une des revendications 1 à 7, dans lequel la tête gamma (12) possède un collimateur (12.2) de type à masque codé ou à sténopé.

9. Dispositif de prise d'image selon l'une des revendications 1 à 8, dans lequel la tête alpha (11) comporte, en amont de l'objectif (11.1) par rapport à la scène, un filtre (11.2) passe-bande ultraviolet.

10. Dispositif de prise d'image selon l'une des revendications 1 à 9, dans lequel le corps (1) est équipé d'un blindage (13) de protection vis-à-vis de rayonnement gamma l'atteignant hors du champ de vision de la tête (11, 12) qui lui est accouplée.

11. Dispositif de prise d'image selon la revendication 10, dans lequel le blindage (13) protège également le scintillateur (12.1) de la tête gamma (12), lorsqu'elle est accouplée au corps (1), vis-à-vis de rayonnement gamma atteignant la tête gamma hors de son champ de vision.

12. Dispositif de prise d'image selon l'une des revendications 1 à 11, comportant en outre au moins un élément solidaire directement ou indirectement du corps (1), cet élément étant choisi parmi un détecteur de spectrométrie gamma collimaté (30), un pointeur laser (33), une caméra couleur (35), un dispositif de mesure de débit de dose non collimaté (39), un télémètre laser (42) orientable.

13. Dispositif d'imagerie comportant un dispositif de prise d'image selon l'une des revendications 1 à 12 et, en outre, un dispositif d'acquisition et de traitement (101) destiné à acquérir des images, connecté au capteur d'image (3) et un dispositif d'affichage (102) relié au dispositif d'acquisition et de traitement (101), destiné à afficher des images visibles de la scène (400) mettant en évidence une ou plusieurs sources de rayonnement gamma (410) et/ou une ou plusieurs sources de contamination alpha (420) qui y sont présentes.

14. Procédé de détection et de localisation de sources de rayonnement gamma ou de sources de contamination alpha à l'aide d'un dispositif d'imagerie selon la revendication 13, dans lequel :
on capture avec le dispositif d'imagerie une image visible (Iv) de la scène observée,
on transfère cette image visible (Iv) dans le dispositif d'acquisition et de traitement où elle est mémorisée,
on capture une image gamma ou alpha (Ig ou Ia) de la scène observée avec le dispositif de prise d'image, la tête gamma ou la tête alpha étant accouplée au corps du dispositif de prise d'image,
on transfère l'image gamma ou alpha (Ig ou Ia) de la scène observée dans le dispositif d'acquisition et de traitement où elle est mémorisée,
on superpose l'image gamma ou alpha (Ig ou Ia) sur l'image visible (Iv) pour obtenir une image visible finale (IFga ou IFva).

15. Procédé de détection et de localisation de sources de rayonnement gamma et de sources de contamination alpha, dans lequel :
on effectue le procédé de la revendication 14 à l'exception de la superposition, après l'étape de capture de l'image gamma ou alpha (Ig ou Ia) de la scène observée,
on désaccouple la tête gamma ou la tête alpha du corps,
on accouple la tête alpha ou la tête gamma au corps,
on capture une image alpha ou gamma (Ia ou Ig) de la scène observée avec le dispositif de prise d'image,
on transfère l'image alpha ou gamma (Ia ou Ig) de la scène observée dans le dispositif d'acquisition et de traitement où elle est mémorisée,
on superpose à l'image visible (Iv), l'image gamma ou alpha (Ig ou Ia) et l'image alpha ou gamma (Ia ou Ig) pour obtenir l'image visible finale (IFvga).

16. Procédé de détection et de localisation de sources de rayonnement gamma et/ou de sources de contamination alpha selon l'une des revendications 14 ou 15 dans lequel l'image visible (Iv) est capturée avec le dispositif de prise d'image muni de la tête gamma ou de la tête alpha, ou avec la caméra en couleur.

## Patentansprüche

1. Bildaufnahmevorrichtung (100) mit einem Körper (1), der eine Bildverstärkerröhre (2) enthält, die eine optische Achse (XX') aufweist und mit einem Bildsensor (3) zusammenwirkt,
**dadurch gekennzeichnet, dass** die Bildaufnahmevorrichtung ferner enthält:
einen Satz (10) von zwei austauschbaren Köpfen (11, 12), die jeweils ein Sichtfeld haben, das um eine Sichtachse (11.3, 12.3) herum definiert ist, wobei der Satz enthält:
einen Gammakopf (12) mit einem Kollimator (12.2) und einem Szintillator (12.1), der dazu bestimmt ist, eine Gammastrahlung, die von einer in einer Szene (400) vorhandenen Gammastrahlungsquelle (410) stammt und in den Kollimator (12.2) eintritt, in eine UV-Strahlung umzuwandeln, die zu der Bildverstärkerröhre (2) übertragen wird; und
einen Alphakopf (11) mit einem UV-durchlässigen Objektiv (11.1), das dazu bestimmt ist, eine UV-Strahlung, die durch Alphastrahlung erzeugt wird, die von einer in der Szene (400) vorhandenen Alpha-Kontaminationsquelle (420) stammt, zu der Bildverstärkerröhre (2) zu übertragen, wobei die Bildverstärkerröhre (2) empfindlich gegenüber der UV-Strahlung ist, die sowohl vom Alphakopf (11) als auch vom Gammakopf (12) stammt,
und Kopplungsmittel (20) zum Ankoppeln jeweils nur eines der beiden Köpfe des Satzes (10) mit dem Körper (1), wobei der angekoppelte Kopf (11 bzw. 12) mit seiner Sichtachse (11.3 bzw. 12.3) dann mit der optischen Achse (XX') der Bildverstärkerröhre (2) zusammenfällt, so dass bei dem Gammakopf (12) die vom Szintillator (12.1) stammende UV-Strahlung die Bildverstärkerröhre erreichen kann, und dass bei dem Alphakopf (11) die UV-Strahlung, die diesen durchquert hat, die Bildverstärkerröhre (2) erreichen kann.

2. Bildaufnahmevorrichtung nach Anspruch 1, wobei die Kopplungsmittel (20) mechanisch ausgebildet sind.

3. Bildaufnahmevorrichtung nach Anspruch 2, wobei die Kopplungsmittel (20) Mittel zum Ankoppeln durch Verschrauben oder Bajonett-Verschluss sind.

4. Bildaufnahmevorrichtung nach einem der Ansprüche 1 bis 3, wobei das Auswechseln des Kopfes (11, 12) manuell erfolgt.

5. Bildaufnahmevorrichtung nach einem der Ansprüche 1 bis 3, wobei das Auswechseln des Kopfes (11, 12) maschinell erfolgt, wobei die beiden Köpfe (11, 12) an einer gleichen Halterung (20.3) gelagert sind, die fest mit der Bildaufnahmevorrichtung verbunden und dazu geeignet ist, sich zu drehen und/oder verschieben.

6. Bildaufnahmevorrichtung nach einem der Ansprüche 1 bis 5, wobei die Bildverstärkerröhre (2) eine Bildverstärkerröhre ist, die gegenüber UV-Strahlung aus Sonnenstrahlung undurchlässig ist.

7. Bildaufnahmevorrichtung nach einem der Ansprüche 1 bis 6, wobei der Szintillator (12.1) des Gammakopfes (12) aus Bariumfluorid BaF₂, Cadmiumwolframat CdWO₄, Cäsiumjodid CsI oder Bismutgermanat BGO besteht.

8. Bildaufnahmevorrichtung nach einem der Ansprüche 1 bis 7, wobei der Gammakopf (12) einen Kollimator (12.2) vom Typ mit kodierter Maske oder Lochkamera ist.

9. Bildaufnahmevorrichtung nach einem der Ansprüche 1 bis 8, wobei der Alphakopf (11) dem Objektiv (11.1) bezüglich der Szene vorgelagert ein UV-Bandpassfilter (11.2) enthält.

10. Bildaufnahmevorrichtung nach einem der Ansprüche 1 bis 9, wobei der Körper (1) mit einer Abschirmung (13) zum Schutz vor Gammastrahlung versehen ist, die diesen außerhalb des Sichtfeldes des Kopfes (11, 12) erreicht, der mit diesem Körper gekoppelt ist.

11. Bildaufnahmevorrichtung nach Anspruch 10, wobei die Abschirmung (13) auch den Szintillator (12.1) des Gammakopfes (12), wenn dieser mit dem Körper (1) gekoppelt ist, vor Gammastrahlung schützt, die den Gammakopf außerhalb seines Sichtfeldes erreicht.

12. Bildaufnahmevorrichtung nach einem der Ansprüche 1 bis 11, ferner enthaltend zumindest ein Element, das direkt oder indirekt fest mit dem Körper (1) verbunden ist, wobei dieses Element ausgewählt ist aus einem kollimierten Gammaspektrometriedetektor (30), einem Laserpointer (33), einer Farbkamera (35), einem nicht kollimierten Dosisleistungsmessgerät (39), einem verstellbaren Laser-Entfernungsmesser (42).

13. Bildgebungsvorrichtung, enthaltend eine Bildaufnahmevorrichtung nach einem der Ansprüche 1 bis 12 und ferner eine Erfassungs- und Verarbeitungsvorrichtung (101), die dazu bestimmt ist, Bilder zu erfassen und die mit dem Bildsensor (3) verbunden ist, sowie eine Anzeigevorrichtung (102), die mit der Erfassungs- und Verarbeitungsvorrichtung (101) verbunden und dazu bestimmt ist, sichtbare Bilder der Szene (400) anzuzeigen, wobei eine oder mehrere Gammastrahlungsquellen (410) und/oder eine oder mehrere Alpha-Kontaminationsquellen (420), die darin vorhanden sind, aufgezeigt werden.

14. Verfahren zum Erfassen und Lokalisieren von Gammastrahlungsquellen bzw. Alpha-Kontaminationsquellen mittels einer Bildgebungsvorrichtung nach Anspruch 13, wobei
mit der Bildgebungsvorrichtung ein sichtbares Bild (Iv) der beobachteten Szene aufgenommen wird,
dieses sichtbare Bild (Iv) in die Erfassungs- und Verarbeitungsvorrichtung übertragen wird, wo es abgespeichert wird.
ein Gamma- bzw. Alphabild (Ig bzw. Ia) der beobachteten Szene mit der Bildaufnahmevorrichtung aufgenommen wird, wobei der Gammakopf bzw. der Alphakopf mit dem Körper der Bildaufnahmevorrichtung gekoppelt ist,
das Gamma- bzw. Alphabild (Ig bzw. Ia) der beobachteten Szene in die Erfassungs- und Verarbeitungsvorrichtung übertragen wird, wo es abgespeichert wird,
das Gamma- bzw. Alphabild (Ig bzw. Ia) dem sichtbaren Bild (Iv) überlagert wird, um ein sichtbares Endbild (IFga bzw. IFva) zu erhalten.

15. Verfahren zum Erfassen und Lokalisieren von Gammastrahlungsquellen bzw. Alpha-Kontaminationsquellen, wobei
das Verfahren nach Anspruch 14 mit Ausnahme von der Überlagerung nach dem Schritt des Aufnehmens von dem Gamma- bzw. Alphabild (Ig bzw. Ia) der beobachteten Szene durchgeführt wird,
der Gammakopf bzw. der Alphakopf vom Körper entkoppelt wird,
der Alphakopf bzw. der Gammakopf mit dem Körper gekoppelt wird,
ein Alpha- bzw. Gammabild (Ia bzw. Ig) der beobachteten Szene mit der Bildaufnahmevorrichtung aufgenommen wird,
das Alpha- bzw. Gammabild (Ia bzw. Ig) der beobachteten Szene in die Erfassungs- und Verarbeitungsvorrichtung übertragen wird, wo es abgespeichert wird,
das Gamma- bzw. Alphabild (Ig bzw. Ia) und das das Alpha- bzw. Gammabild (la bzw. Ig) dem sichtbaren Bild (Iv) überlagert werden, um das sichtbare Endbild (IFvga) zu erhalten.

16. Verfahren zum Erfassen und Lokalisieren von Gammastrahlungsquellen bzw. Alpha-Kontaminationsquellen nach einem der Ansprüche 14 oder 15, wobei das sichtbare Bild (Iv) mit der Bildaufnahmevorrichtung, die mit dem Gammakopf bzw. Alphakopf versehen ist, oder mit der Farbkamera aufgenommen wird.

## Claims

1. Device for taking an image (100) having a body (1) comprising an image intensifier tube (2) having an optical axis (XX') and interacting with an image sensor (3), **characterised in that** the device for taking an image further comprises:
a set (10) of two interchangeable heads (11, 12), each of them having a field of view defined around a viewing axis (11.3, 12.3), the set comprising:
one gamma head (12) comprising a collimator (12.2) and a scintillator (12.1) for transforming a gamma ray coming from a gamma radiation source (410) present in a scene (400) and penetrating into the collimator (12.2) into an ultraviolet ray transmitted to the image intensifier tube (2); and
one alpha head (11) comprising a lens transparent (11.1) to ultraviolet radiation for transmitting an ultraviolet ray generated by an alpha ray coming from an alpha contamination source (420) present in the scene (400) to the image intensifier tube (2), the image intensifier tube (2) being sensitive to the ultraviolet radiation coming both from the alpha head (11) and the gamma head (12),
and means for coupling (20) the two heads of the set (10) to the body (1) one at a time, the coupled head (11 or 12) then having a viewing axis (11.3 or 12.3) coincident with the optical axis (XX') of the image intensifier tube (2) so as to enable, for the gamma head (12), the ultraviolet radiation coming from the scintillator (12.1) to reach the image intensifier tube (2) and, for the alpha head (11), the ultraviolet radiation that has traversed it to reach the image intensifier tube (2).

2. Device for taking an image according to claim 1, wherein the coupling means (20) are mechanical.

3. Device for taking an image according to claim 2, wherein the coupling means (20) are screwing or bayonet coupling means.

4. Device for taking an image according to one of claims 1 to 3, wherein the change of head (11, 12) is manual.

5. Device for taking an image according to one of claims 1 to 3, wherein the change of head (11, 12) is automatic, the two heads (11, 12) being mounted on a same support (20.3) integral with the device for taking an image and able to be displaced rotationally and/or translationally.

6. Device for taking an image according to one of claims 1 to 5, wherein the image intensifier tube (2) is an image intensifier tube that is blind to ultraviolet rays of solar origin.

7. Device for taking an image according to one of claims 1 to 6, wherein the scintillator (12.1) of the gamma head (12) is made of barium fluoride BaF₂, cadmium tungstate CdWO₄, caesium iodide CsI, or bismuth germanate BGO.

8. Device for taking an image according to one of claims 1 to 7, wherein the gamma head (12) has a collimator (12.2) of coded mask or pinhole type.

9. Device for taking an image according to one of claims 1 to 8, wherein the alpha head (11) comprises, upstream of the objective (11.1) with respect to the scene, an ultraviolet bandpass filter (11.2).

10. Device for taking an image according to one of claims 1 to 9, wherein the body (1) is equipped with a protective shielding (13) vis-à-vis gamma radiation reaching it outside of the field of view of the head (11, 12), which is coupled thereto.

11. Device for taking an image according to claim 10, wherein the shielding (13) also protects the scintillator (12.1) of the gamma head (12), when it is coupled to the body (1), vis-à-vis gamma radiation reaching the gamma head outside of its field of view.

12. Device for taking an image according to one of claims 1 to 11, moreover comprising at least one element directly or indirectly integral with the body (1), said element being selected from a collimated gamma spectrometry detector (30), a laser pointer (33), a colour camera (35), a non-collimated dose rate measuring device (39), an orientable laser telemeter (42).

13. Imaging device comprising a device for taking an image according to one of claims 1 to 12 and, moreover, an acquisition and processing device (101) for acquiring images, connected to the image sensor (3) and a display device (102) connected to the acquisition and processing device (101), for displaying visible images of the scene (400) highlighting one or more gamma radiation sources (410) and/or one or more alpha contamination sources (420), which are present therein.

14. Method for detecting and locating gamma radiation sources or alpha contamination sources using an imaging device according to claim 13, wherein:
a visible image (Iv) of the scene observed is captured with the imaging device,
said visible image (Iv) is transferred to the acquisition and processing device, where it is memorised,
a gamma or alpha image (Ig or la) of the scene observed is captured with the device for taking an image, the gamma head or the alpha head being coupled to the body of the device for taking an image,
the gamma or alpha image (Ig or la) of the scene observed is transferred to the acquisition and processing device, where it is memorised,
the gamma or alpha image (Ig or la) is superimposed on the visible image (Iv) to obtain a final visible image (IFga or IFva).

15. Method for detecting and locating gamma radiation sources and alpha contamination sources, wherein:
the method of claim 14 is carried out with the exception of the superimposition, after the step of capture of the gamma or alpha image (Ig or Ia) of the scene observed,
the gamma head or the alpha head is uncoupled from the body,
the alpha head or the gamma head is coupled to the body,
an alpha or gamma image (Ia or Ig) of the scene observed is captured with the device for taking an image,
the alpha or gamma image (Ia or Ig) of the scene observed is transferred to the acquisition and processing device, where it is memorised,
the gamma or alpha image (Ig or Ia) and the alpha or gamma image (Ia or Ig) are superimposed on the visible image (Iv), to obtain the final visible image (IFvga).

16. Method for detecting and locating gamma radiation sources and/or alpha contamination sources according to one of claims 14 or 15, wherein the visible image (Iv) is captured with the device for taking an image provided with the gamma head or the alpha head, or with the colour camera.
